# EUROPEAN PATENT APPLICATION

(11) **EP 3 611 357 A1**
(43) Date of publication of application: **19.02.2020**
(21) Application number: 18784219.0
(22) Date of filing: 30.03.2018
(51) Int. Cl.: F02B 71/04, F01D 13/02, F01K 23/02, F02B 63/04, F02B 71/06, F02B 73/00, F02C 5/02, F02C 5/08, F02C 5/12, H02K 35/02

(54) **ENGINE**

(30) Priority: 13.04.2017 JP 2017079927
(71) Applicant: Amnext Technology Inc., Yokohama-shi, Kanagawa 227-0034 (JP)
(72) Inventor: OHISHI, Yasutoshi, Yokohama-shi Kanagawa 227-0034 (JP)
(74) Representative: Körber, Martin Hans
(86) International application number: PCT/JP2018/013737
(87) International publication number: WO 2018/190156

(57) **Abstract**

An engine (5) with a gas supply unit (10) that supplies combustion gas for driving purposes with linear reciprocal movement of a piston (12) is provided. The gas supply unit (10) includes a first combustion chamber (31) provided on a first side of the piston, a first gas outlet (17) that supplies high pressure combustion gas generated in the first combustion chamber for driving purposes, and a second combustion chamber (32) that is provided on a second side on the other side of the piston and generates a second force that moves the piston toward the first side. The engine (5) further includes a piston control unit (60) that controls the position of the piston against a first force of the piston that moves due to combustion in the first combustion chamber and the second force described above.

## Description

### Technical Field

The present invention relates to an engine that uses high-pressure combustion gas generated in a combustion chamber as a power source.

### Background Art

International Publication WO2015/159956 discloses the provision of an engine that expels combustion gas as a driving force. This engine includes a combustion chamber, a fuel supply path that mixes and supplies fuel and air to the combustion chamber, an igniter that ignites the mixed gas in the combustion chamber, a gas discharge path that ejects the combustion gas from the combustion chamber through a nozzle, and an opening and closing device that opens and closes the gas discharge path. The gas discharge path is opened by the opening and closing device immediately before ignition, at the same time as ignition, or immediately after ignition.

### Summary of Invention

For engines that use a piston and supply combustion gas to a turbine or the like as a driving force, there is demand for an engine where the timing for supplying the combustion gas, the combustion efficiency, and the like can be controlled more easily.

One aspect of the present invention is an engine including a gas supply unit that supplies combustion gas for driving purposes with reciprocating linear movement of a piston. The gas supply unit includes: a first combustion chamber provided on a first side of the piston; a first gas outlet that supplies high-pressure combustion gas generated in the first combustion chamber for driving purposes; and a second chamber that is provided on a second side on an opposite side of the piston and generates a second force in an opposite direction that moves the piston toward the first side. The engine further includes a piston control unit that controls a position of the piston against a first force that moves the piston due to combustion in the first combustion chamber and the second force described above. By controlling the position of the piston that moves in a straight line (rectilinearly), it is possible to control the compression ratio, the combustion cycle, and the like when the capacity (volume) of the first combustion chamber is reduced by the piston to adiabatically compress the gas in the combustion chamber. The gas inside the combustion chamber may be a mixed gas of fuel and air, and may be ignited by an igniter or the like when compressed. The gas in the combustion chamber may be air, and fuel may be injected and compression ignition may be performed.

The gas supply unit may include an exhaust port that exhausts low-pressure combustion gas in the first combustion chamber. This makes it possible to improve the replacement efficiency for the combustion gas and the mixed gas or air in the first combustion chamber.

The second force may be a force (reaction) generated by a spring or magnetism. A typical second chamber (sub chamber) is a second combustion chamber, and the gas supply unit may include a second gas outlet that supplies high-pressure combustion gas generated in the second combustion chamber for driving purposes. The high-pressure combustion gas may be alternately supplied from the first and second combustion chambers for driving purposes, and the combustion gas for driving purposes may be supplied from the gas supply unit cycle-by-cycle of movement of the piston.

The piston control unit may directly control the position of the piston mechanically or magnetically. The piston control unit may be provided outside the first combustion chamber and the second chamber, and may be equipped with a first control unit that controls the position of the piston via a shaft connected to the piston. The engine may include a first linear power generating unit connected to the piston via a shaft. The first linear power generating unit may include a function as the first control unit. The first linear power generating unit may include a function as a first linear motor that drives the piston to start the engine. Since the piston control unit controls the position of the piston against the first force of the piston or the second force that acts toward the opposite side, the linear power generating unit may regenerate the electrical energies for the power and/or a force that resists the power acting in the opposite direction, which are required to control the position of the piston.

The piston control unit may include a second control unit that is disposed on the outer periphery of the first combustion chamber and the second chamber (sub chamber) and controls the position of the piston via a magnetic field. The engine may include a second linear power generating unit that is disposed on the outer periphery of the first combustion chamber and the second chamber and is connected to the piston via a magnetic field. The second linear power generating unit may include a function as a second control unit. The second linear power generating unit may include a function as a second linear motor that drives the piston to start the engine.

The engine may have a gas turbine unit (gas turbine) to which high-pressure combustion gas is supplied from the first gas outlet. A typical gas turbine unit includes a radial turbine, and a plurality of gas supply units may be disposed around the periphery of the radial turbine.

Another aspect of the present invention is a power generating apparatus including the engine described above and a generator connected to the gas turbine unit. The gas turbine and the generator may be directly coupled or may be connected via gears or the like.

### Brief Description of Drawings

[FIG. 1]

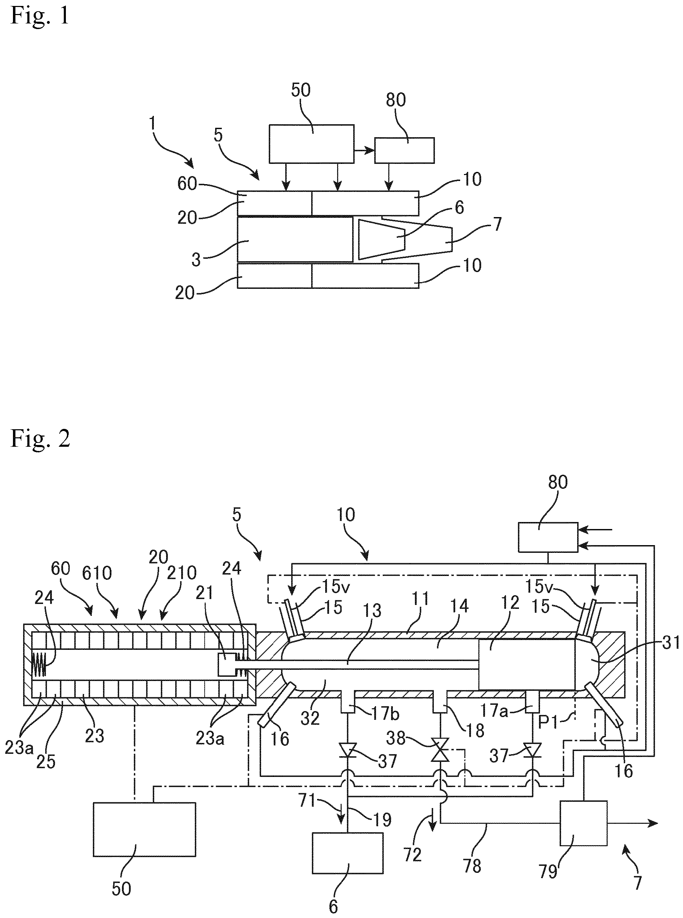

   FIG. 1 depicts the overall configuration of a power generating unit.
[FIG. 2]
   FIG. 2 depicts the overall configuration of an engine.
[FIG. 3]

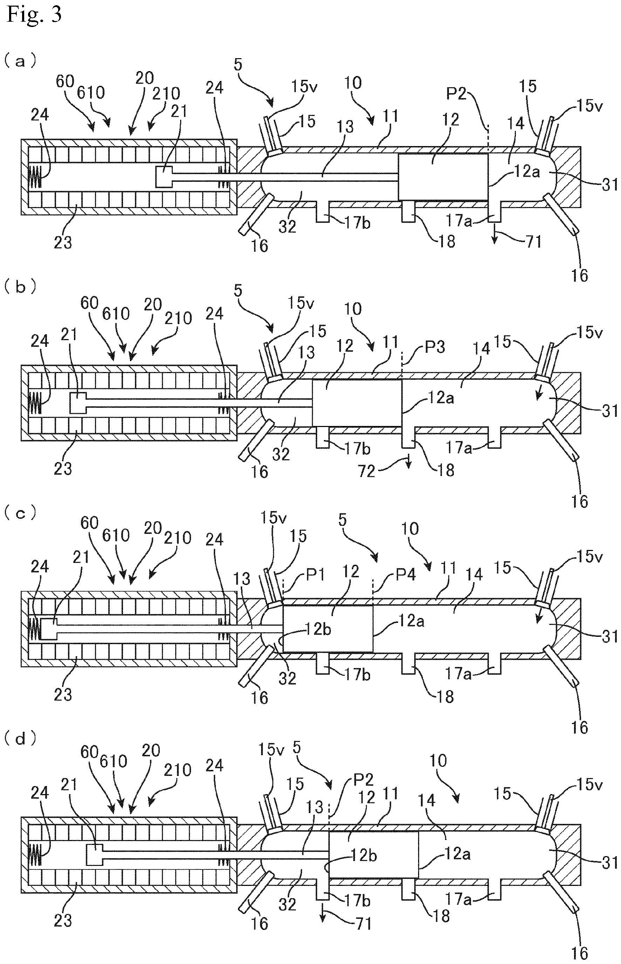

   FIG. 3 is a diagram for explaining the operation of the engine, and in particular, a gas supply unit.
[FIG. 4]

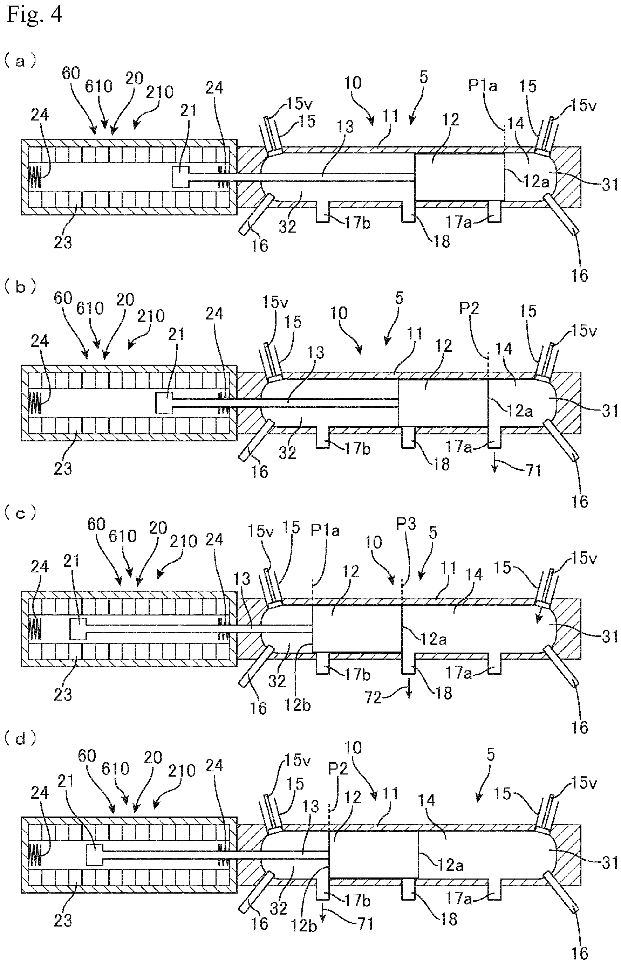

   FIG. 4 is a diagram for further explaining the operation of the gas supply unit.
[FIG. 5]

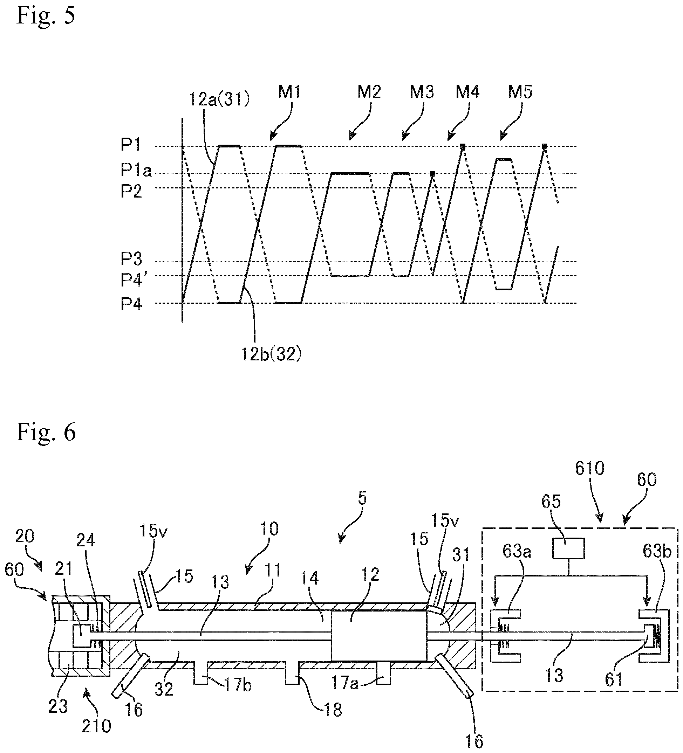

   FIG. 5 is a diagram illustrating operation modes of the gas supply unit.
[FIG. 6]
   FIG. 6 depicts the overall configuration of another engine.
[FIG. 7]

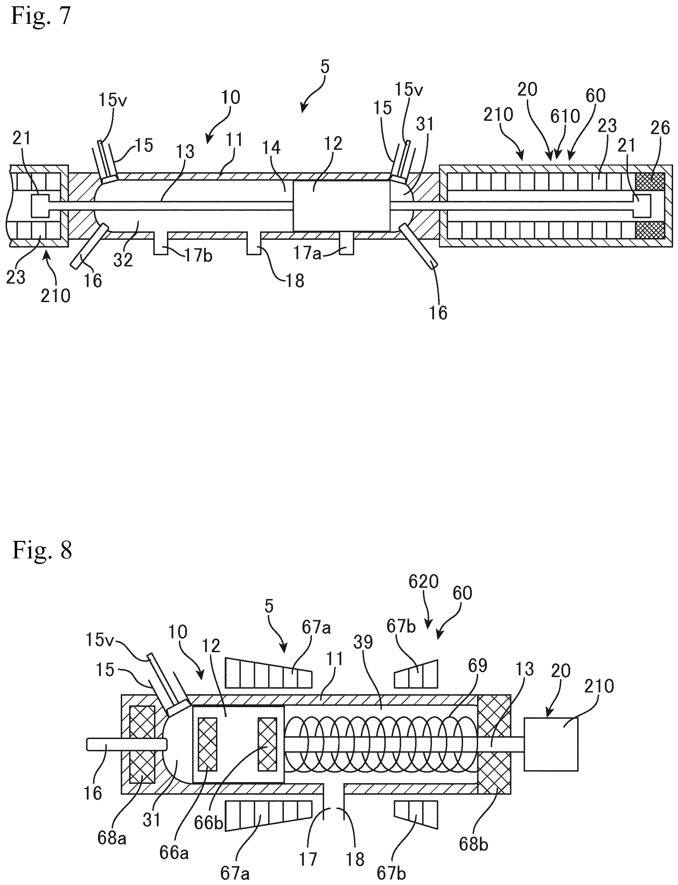

   FIG. 7 depicts the overall configuration of yet another engine.
[FIG. 8]
   FIG. 8 depicts the overall configuration of yet another engine.
[FIG. 9]

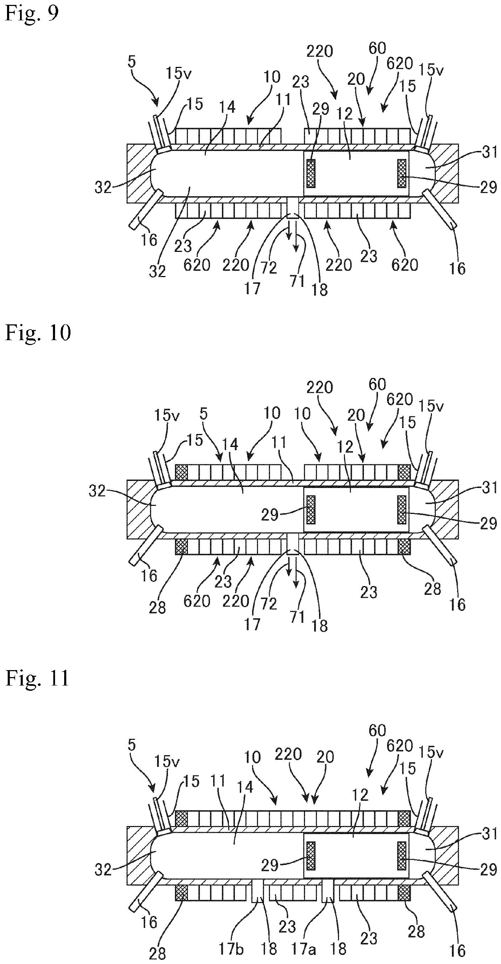

   FIG. 9 depicts the overall configuration of yet another engine.
[FIG. 10]
   FIG. 10 depicts the overall configuration of yet another engine.
[FIG. 11]
   FIG. 11 depicts the overall configuration of yet another engine.
[FIG. 12]

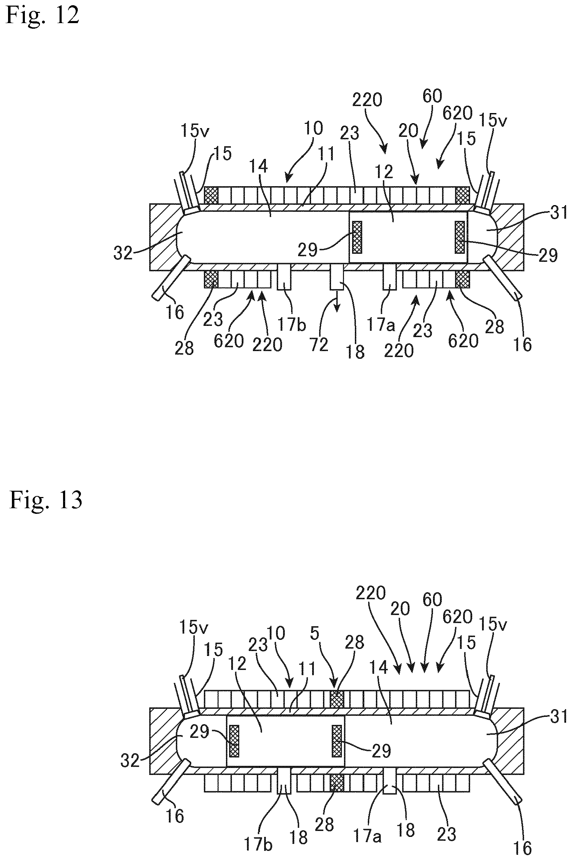

   FIG. 12 depicts the overall configuration of yet another engine.
[FIG. 13]
   FIG. 13 depicts the overall configuration of yet another engine.
[FIG. 14]

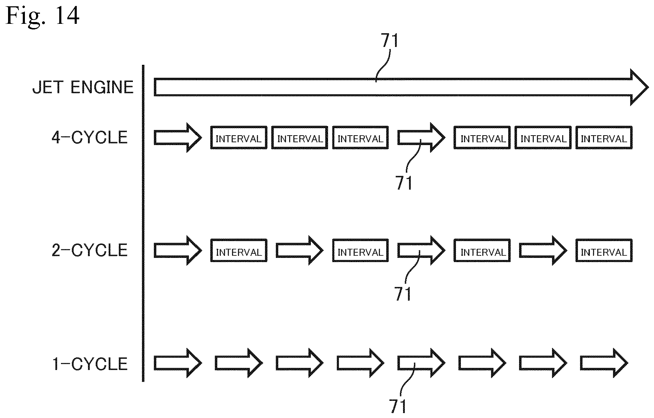

   FIG. 14 is a diagram for explaining the supply timing of driving gas.

### Description of Embodiments

FIG. 1 depicts a power generating apparatus (power generating unit) 1 including an engine 5, which is equipped with a plurality of gas supply units 10 and a gas turbine unit 6, and a generator 3, which is rotationally driven by the gas turbine unit (for example, a radial turbine, hereinafter simply "turbine") 6. The power generating unit 1 includes the generator 3 that is linearly connected in the length direction to the turbine 6, the plurality of gas supply units 10 that are arranged around the turbine 6 and a turbine exhaust nozzle 7 in the center, and linear power generating units 20 that are provided so as to correspond one-to-one to the gas supply units 10. Each linear power generating unit 20 is connected to a gas supply unit 10 in the length direction and functions as a piston control unit 60. The turbine 6, the generator 3, the plurality of gas supply units 10 and the plurality of linear power generating units 20 are provided in a state that enables installation or transportation as a single or integrated apparatus. The power generating unit 1 further includes: a management unit 50 that controls the power generating unit 1 via the linear power generating units (linear motor units) 20, which also serve as piston control units 60, and gas supply units 10; and a fuel supply unit 80 that supplies fuel and air for combustion purposes to the gas supply units 10.

The gas turbine unit 6 may be a radial turbine (radial flow turbine), an axial flow turbine, or a combination of a radial turbine and an axial flow turbine. In the engine 5, a plurality of, for example, four, gas supply units 10 are arranged at symmetrical positions around the turbine 6 at a pitch of 90 degrees for example, and supply the combustion gas used for driving to the turbine 6 synchronously or at different timings. The number of gas supply units 10 is not limited to four and may be three or less or may be five or more. The arrangement is also not limited to a 90-degree pitch.

FIG. 2 depicts a configuration of a gas supply unit 10 that supplies a high-pressure combustion gas 71 for driving purposes to the turbine 6, and a linear power generating unit 20 that also serves as the piston control unit 60 that controls a piston 12 of the gas supply unit 10 schematically but in more detail by way of a cross-sectional view. The gas supply unit 10 includes a cylinder 11, on the inside 14 of which the piston 12 performs reciprocating linear movement. In the cylinder 11, a first combustion chamber 31 is formed on one side (first side, the right side in the drawing) of the piston 12 and a second combustion chamber 32 is formed on the other side (second side, the left side in the drawing) of the piston 12.

The linear power generating unit 20 that also serves as the piston control unit 60 is connected so as to be integrated in the length direction of the gas supply unit 10, and in this example is adjacently provided on the left side of the gas supply unit 10. The linear power generating unit 20 includes a tube-like or cylindrical housing 25, a plurality of fixed coils (electromagnets) 23 that are disposed in the length direction (axial direction) inside the housing 25 so as to function as electricity generating coils (electromagnetic coils) during generation of power and function as fixed electromagnets during motor driving, and a movable magnet (movable electromagnet) 21 that moves along the axial direction inside the fixed coils 23. The movable magnet 21 is connected to the piston 12 by a shaft (rod) 13. Coil springs 24 that function as shock absorbers to moderate the movement of the movable magnet 21 at the ends are provided at both ends inside the housing 25. In place of the coil springs 24, or together with the coil springs 24, the magnetic poles of the electromagnetic coils 23a positioned at both ends may be set opposite to the movable magnet 21 so as to moderate or absorb the movement and impact at both ends of the piston 12. The movable magnet 21 may be a permanent magnet, and the fixed coils (electromagnets) 23a at both ends may be permanent magnets with magnetic poles that repel the movable magnet 21. Also, the fixed coils 23 do not all need to be electromagnets, and magnets at positions that are suitable for controlling the piston 12 may be replaced with permanent magnets with appropriate magnetic poles.

Accordingly, in the present embodiment, the piston control unit 60 includes a first control unit 610 that is disposed outside the first combustion chamber 31 and the second combustion chamber 32, and controls the position of the piston 12 via the shaft 13 which is connected to the piston 12. The linear power generating unit 20 also includes a first linear power generating unit 210 connected to the piston 12 via the shaft 13. In addition, the first linear power generating unit 210 has a function as the first control unit 610, with the first linear power generating unit 210 having a function as a first linear motor that drives the piston 12 to start the engine 5, or more specifically, the respective gas supply units 10. In this engine 5, the first combustion chamber 31 and the second combustion chamber 32 each functions as a second chamber (sub-chamber) for the other chamber to generate a force (second force) that acts in the opposite direction to the force (first force) generated on the piston 12 by combustion.

Each gas supply unit 10 includes an intake port 15 that introduces air or a mixture of fuel and air from the fuel supply unit 80, an intake valve 15v that opens and closes the intake port 15, and a fuel injecting device 16, these elements being provided in the vicinity of the first end (right end) and the second end (left end) of the inside 14 of the cylinder 11. The fuel injecting device 16 also serves as an ignition device. If the temperature of the compressed air in the combustion chambers 31 and 32 may be raised to the ignition temperature of the fuel simply by movement of the piston 12, combustion may commence in the combustion chambers 31 and 32 by injecting fuel from the fuel injecting device 16 (compression ignition mode). If it is difficult to raise the compression ratio of the compressed air to the ignition temperature through a process of adiabatic compression, instead of compressed air, the fuel supply unit 80 supplies a fuel-air mix to the combustion chambers 31 and 32, and the fuel injecting device 16 functions as an ignition device so that combustion may start in the combustion chambers 31 and 32 (spark ignition mode). For the compression ignition mode, it is possible to apply combustion technology related to homogeneous charge compression ignition (HCCI), which has been advancing in recent years.

The gas supply unit 10 includes a first gas outlet (output port) 17a that supplies high-pressure combustion gas from the first combustion chamber 31 to the turbine 6 as driving gas 71, a second gas outlet (output port) 17b that supplies high-pressure combustion gas from the second combustion chamber 32 to the turbine 6 as the driving gas 71, and a shared exhaust port 18 for exhausting low-pressure combustion gas (exhaust gas) 72 from the respective combustion chambers 31 and 32.

The exhaust port 18 is provided in substantially the center in the length direction of the cylinder 11, and when the piston 12 passes by the exhaust port 18, combustion gas is exhausted from the respective combustion chambers 31 and 32 via an exhaust gas line 78 to the atmosphere. The exhaust gas line 78 is provided with a control valve 38 for pressurizing the respective combustion chambers 31 and 32 independently of movement of the piston 12 and a turbocharger 79 which uses the energy of the exhaust gas 72 to pressurize the intake air.

The first gas output port 17a and the second gas output port 17b are provided at positions that are shifted from the center in the length direction of the cylinder 11 toward the respective ends and are positions that are symmetrical with respect to the center. In the first combustion chamber 31 and the second combustion chamber 32 formed in the cylinder 14 with the piston 12 in between, the gas output ports 17a and 17b are provided at positions where the piston 12 moves (passes) at an early stage after combustion. Accordingly, in each gas supply unit 10, the piston 12 has a function of opening and closing the respective gas output ports (gas outlets) 17a and 17b. The gas output ports 17a and 17b supply high-pressure driving gas 71 to the turbine 6 through a gas supply line 19. The gas supply line 19 may be provided with a function as a critical nozzle. The gas supply line 19 is also equipped with valves or other backflow prevention mechanisms 37 for preventing the backflow of the driving gas 71 from the combustion chambers 31 and 32 to each other and the backflow of driving gas 71 from other gas supply units 10.

The arrangement and configuration of the gas output ports 17a and 17b and the exhaust port 18 in the gas supply unit 10 are merely examples. An exhaust port 18 may be provided for each combustion chamber, or a gas output port 17 and an exhaust port 18 may be shared in each combustion chamber, with the output destination of the gas from the combustion chamber being switched between the gas supply line 19 and the exhaust gas line 78 with a controlling mechanism supplied by the management unit 50 or an appropriate pressure control valve. Also, instead of opening and closing the gas output ports 17a and 17b and the exhaust port 18 through movement of the piston 12, the ports may be opened and closed by a valve operated with control by the management unit 50 or control by an appropriate mechanism.

The management unit 50 that controls the engine 5 is configured to control the movement of the movable magnet 21, for example, the speed and stopping position, by controlling the poles and magnetic fields of the fixed coils 23 of the first linear power generating unit 210. By doing so, movement of the piston 12, to which the movable magnet 21 is connected, on the inside 14 of the cylinder, for example, the speed and the stopping positions (dead centers, dead points) are controlled. Typically, the stopping positions (the top dead center and bottom dead center) of the piston 12 are controlled. Accordingly, the first linear power generating unit 210 functions as the piston control unit 60 (first control unit 610). The management unit 50 is also configured to control the stopping time, the movement amount, or movement speed of the piston 12 before and after combustion in the combustion chambers 31 and 32 by controlling the magnetic field of the linear power generating unit 210 against the power (force, pressure) of combustion. The management unit 50 also uses the linear power generating unit 210 as a linear motor, and drives the piston 12 to function as a starter that starts (initializes) each gas supply unit 10 that is an internal combustion engine.

FIG. 3 depicts typical operation of a gas supply unit 10. The gas supply unit 10 is provided with the combustion chambers 31 and 32 symmetrically disposed with the exhaust port 18 in the center. The piston 12 reciprocally moves in a straight line (rectilinearly) so that compression, ignition, and combustion are repeated alternately in the symmetrically arranged combustion chambers 31 and 32 that are provided on both sides of the piston 12.

First, as depicted in FIG. 2, when the piston 12 reaches the dead center P1 at the right end and ignition combustion occurs in the first combustion chamber 31 on the right side, this becomes a force (second force) toward the opposite side for the combustion chamber 32 on the left side, so that the piston 12 moves to the left and the air or mixed gas in the combustion chamber 32 on the left side is compressed. Accordingly, the combustion chambers 31 and 32 each act as a second chamber (sub chamber, or chamber that generates a reaction) for the combustion chamber 32 and 31 on the opposite side. In more detail, when combustion starts in the combustion chamber 31 on the right side, the piston is pushed to the left by the pressure of the combustion gas (that is, expanding gas) generated inside the combustion chamber 31 as depicted in FIG. 3(a), and when the side surface of the piston 12 faces to the combustion chamber 31, that is, the right surface 12a, reaches the position P2, the first gas output port 17a is opened by the movement of the piston 12, and high-pressure combustion gas from the opened first gas output port 17a is supplied to the turbine 6 as the driving gas 71, thereby driving the turbine 6.

As depicted in FIG. 3(b), the pressure of the combustion gas (expanding gas) generated inside the combustion chamber 31 pushes the piston 12 further to the left, so that the right surface 12a reaches the position P3. When the exhaust port 18 has been opened by the movement of the piston 12, low-pressure combustion gas remaining in the combustion chamber 31 is exhausted as the exhaust gas 72. At substantially the same time, the intake valve 15v is opened, and compressed air or a fuel-air mix is supplied into the combustion chamber 31. The air or mixed gas supplied from the fuel supply unit 80 to the combustion chamber 31 is gas that has been pressurized or compressed by the turbocharger 79, and can be injected into the combustion chamber 31 immediately after the exhaust port 18 has been opened and the pressure in the combustion chamber 31 has fallen. To increase the injection efficiency into the combustion chamber 31 and raise the compression efficiency in the combustion chamber 31, the engine 5 may include a compressor used for compression in addition to or separately from the turbocharger. The compressor may be electric or may be driven by the turbine 6.

Meanwhile, for the combustion chamber 32 on the left on the opposite side of the piston 12, in the state depicted in FIGS. 3(a) and (b), the pressure of the combustion gas in the combustion chamber 31 on the right is a force (second force) that acts on the opposite side of the piston 12 and causes the piston 12 to move to the left and compress the air or mixed gas that has been supplied to the combustion chamber 32. As depicted in FIG. 3(c), when the left surface 12b of the piston 12 reaches a position P1 corresponding to the top dead center (top dead point) of the combustion chamber 32, the first linear power generating unit 210 that also serves as the first control unit 610 uses a magnetic field to control the stopping position of the piston 12 against the pressure (power or force, first force) of the combustion gas in the combustion chamber 31 on the right that is acting so as to move (press) the piston 12 to the left. At this time, the linear power generating unit 210 may also generate power using the movement of the piston 12. It is possible to recover (regenerate) energy using the power generating unit 210, store electric power in a battery or the like (not illustrated), and subsequently use the power for positional control of the piston 12. Note that when the left surface 12b of the piston 12 reaches the top dead center P1, the right surface 12a of the piston 12 reaches the position P4 corresponding to a bottom dead center (bottom dead point, lower dead point).

In FIG. 3(c), when ignition combustion is performed in the left combustion chamber 32, the gas expands due to the combustion, causing the piston 12 to move to the right due to the pressure of the combustion gas. As depicted in FIG. 3(d), when the left surface 12b of the piston 12 reaches the position P2, the second gas output port 17b is opened due to movement of the piston 12, so that high-pressure gas is supplied from the opened second gas output port 17b to the turbine 6 as the driving gas 71, thereby driving the turbine 6. For the right combustion chamber 31, the exhaust port 18 is closed by the piston 12 and the pressure of the combustion gas in the left combustion chamber 32 becomes a force in the opposite direction (second force), so that the air or mixed gas in the right combustion chamber 31 is compressed. The timing at which exhausting of gas from the exhaust port 18 stops may be controlled by a valve 38 provided on the exhaust gas line 78. By repeating this operation, the high-pressure driving gas 71 is supplied from a gas supply unit 10 to the turbine 6 alternately and substantially continuously from the left and right combustion chambers 31 and 32 to drive the turbine 6.

In the engine 5, this movement of the piston 12 inside 14 of the cylinder may be monitored and controlled by the linear power generating unit 20 (first linear power generating unit 210) that has a function as the piston control unit 60 (first control unit 610). One of the modes for controlling the movement of the piston 12 is to change the position of the top dead center. FIG. 4 depicts the operation of a gas supply unit 10 when the top dead center (upper dead point, top dead point) has been changed from the position P1 to a position P1a. As depicted in FIG. 4(a), by controlling the magnetic fields generated by the fixed coils 23 to control the stopping position of the movable magnet 21 in the linear power generating unit 210, it is possible to set the stopping position of the right surface 12a of the piston 12 at the position P1a that is closer to the center than the position P1, thereby changing the compression ratio of the air or mixed gas in the combustion chamber 31. In this case also, when the piston 12 has been moved to the left by the high-pressure combustion gas generated in the combustion chamber 31 and the right surface 12a has reached the position P2, as depicted in FIG. 4 (b), the first gas output port 17a is opened and gas is supplied as the driving gas 71 to the turbine 6. At the same time, the air or mixed gas in the left combustion chamber 32 is compressed by the piston 12.

As depicted in FIG. 4(c), when the piston 12 has moved further to the left and the right surface 12a has reached the position P3, the exhaust port 18 is opened, the combustion gas is exhausted from the combustion chamber 31, and at the same time, air or mixed gas is supplied to the combustion chamber 31. At this time, once the left surface 12b of the piston 12 has reached the position P1a that is the top dead center, combustion is performed in the combustion chamber 32, and as depicted in FIG. 4(d), the piston 12 moves to the right and high-pressure combustion gas generated in the combustion chamber 32 is supplied from the second gas output port 17b to the turbine 6 as the driving gas 71.

The linear power generating unit 210 may also control the stopping time of the piston 12, for example, changing the stopping time at the respective top dead centers. It is also possible to control the time or timing at which the piston 12 moves from the top dead center to the position P2 where gas is outputted as the driving gas 71. As one example, the timing at which the piston 12 is released from the top dead center P1 results to the timing at which the gas output ports 17a and 17b open. The timing at which the output ports 17a and 17b are opened and the driving gas 71 is supplied to the turbine 6 may be any timing where it is possible for the combustion gas generated in the combustion chambers 31 and 32 to drive the turbine 6 most efficiently as the driving gas 71, may be while combustion is continuing after combustion has started in the combustion chambers 31 and 32, or may be after the combustion has ended.

Typical timing is to release and move the piston 12 while combustion continues in the combustion chamber 31 and open the gas output port 17a. In the same way, it is possible to release the piston 12 and open the gas output port 17b while combustion continues in the combustion chamber 32. By opening the output ports 17a and 17b at such timing, combustion in the respective combustion chambers 31 and 32 can transition from constant volume combustion to constant pressure combustion, which can extend the combustion time compared to explosive combustion and extend the supplying time of the driving gas 71. After combustion ends, the combustion gas expands adiabatically and is supplied as the driving gas 71 from the combustion chambers 31 and 32 to the turbine 6.

The gas supply unit 10 is a combustion unit in which the piston 12 moves reciprocally in a straight line on the inside 14 of the cylinder 11, and the pressure of the combustion gas in the combustion chamber on the opposite side of the piston 12 is used to further compress (adiabatically compress) the compressed air supplied to the respective combustion chambers 31 and 32. If it is possible to sufficiently increase the compression ratio in the process of adiabatic compression and the temperature of the compressed air inside the combustion chambers 31 and 32 can be raised to the ignition temperature of the fuel, combustion can be started inside the combustion chambers 31 and 32 by injecting fuel from the fuel injecting device 16 (compression ignition mode). If it is difficult to increase the compression ratio of compressed air to the ignition temperature in the process of adiabatic compression, instead of compressed air, it is possible to supply air mixed with fuel to the combustion chambers 31 and 32 and to use the fuel injecting device 16 as an ignition device to start combustion in the combustion chambers 31 and 32 (spark ignition mode). The compression ratio in the combustion chambers 31 and 32 may be controlled via the piston control unit 60 (linear power generating unit 20) controlling the stopping position or stroke of the piston 12. Although the intermittent combustion is repeated in the combustion chambers 31 and 32, by opening the gas output ports 17a and 17b during combustion, it becomes possible to supply high temperature and high pressure gas (driving gas) 71 to the turbine 6 more continuously.

In either case, an intermittent combustion cycle, and in theory, a diesel engine cycle where combustion is performed at a constant pressure, an Otto cycle where combustion is performed at a constant volume, or a state called a "Sabathe cycle" that has the features of both of these is realized. In the intermittent combustion cycle, the pressure in the combustion chambers 31 and 32 during combustion may be increased by controlling the generated combustion gas itself, or the position, moving speed, and the like of the piston 12, which makes it easy to obtain high-temperature, high-pressure combustion gas. In addition, this engine 5 may be made compatible with both spark ignition mode and compression ignition mode, in which air or a mixed gas is compressed to cause self-ignition. The compression ignition may be an example technique that may extend the combustion time and extend the time for which combustion gas may be continuously supplied to the turbine 6 as the driving gas 71. As one example, it is possible to use homogeneous charge compression ignition (HCCI) technology that has been developed in recent years.

The respective combustion states in each combustion chamber 31 and 32 and the speed (frequency) of the combustion cycle can be flexibly controlled by changing the amount of fuel (mixing ratio) supplied to the combustion chambers 31 and 32, changing the ignition timing in the combustion chambers 31 and 32, providing equipment, such as a relief valve, that controls the pressure inside the combustion chambers 31 and 32, and/or by controlling movement of the piston 12, such as controlling the length by which the piston 12 moves. This means that it is possible to use various substances, such as diesel, gasoline, alcohol, and hydrogen, as fuel.

FIG. 5 depicts a number of operation modes realized by the gas supply unit 10 by way of movement of the piston 12, and in more detail, movement of both surfaces 12a and 12b of the piston 12. The solid lines indicate movement of the piston 12 in the direction of compression in the respective combustion chambers 31 and 32, and the broken lines indicate movement of the piston 12 in the direction of expansion. In mode M1, the piston 12 moves between the top dead center P1 and the bottom dead center P4, and combustion is performed in a fixed volume state by the linear power generating unit 20, in this example, the first linear power generating unit 210, restricting the movement of the piston 12 for a certain period of time at the start of combustion at the top dead center P1. Mode M1 is an example of a compression ignition mode. After the start of combustion, the piston 12 is released, and as indicated by the broken lines, the gas output ports 17a and 17b are alternately opened at the timings where the surfaces 12a and 12b on the combustion chamber sides of the piston 12 reach the respective positions P2, resulting in the driving gas 71 being alternately supplied from the combustion chambers 31 and 32 to the turbine 6. In addition, when the combustion chamber side surfaces 12a and 12b of the piston 12 alternately reach the position P3, the exhaust port 18 is opened so that in the combustion chambers 31 and 32, gas is exhausted and compressed air or mixed gas is supplied alternately (at the respective timings). After this, the pressure of the combustion gas in the other combustion chamber 32 or 31 is used as a driving force so that the piston 12 alternately compresses the combustion chambers 31 and 32.

In mode M2, the movement range of the piston 12 is limited to a narrower range so that the piston 12 moves between the top dead center P1a and the corresponding bottom dead center P4'. In mode M2, the movement of the piston 12 at the dead centers is restricted for a longer time and the constant volume combustion period is set longer so that the combustion state is close to the Sabathe cycle or the diesel cycle. In mode M3, the restriction of movement at the dead centers of the piston 12 is shortened, and in mode M4, combustion in the combustion chambers 31 and 32 is explosive and there is no limiting of movement of the piston 12, thereby realizing a combustion state similar to the Otto cycle.

The limiting of the movement amount of the piston 12 by the linear power generating unit 210 may be set flexibly between the maximum dead center P1 and the minimum dead center P1a as in mode M5. In addition, it is possible to change the combustion mode (combustion state) of the combustion chambers 31 and 32 in units of one cycle (in cycle-by-cycle), and also possible to perform continuous operation in the same combustion mode for a certain period of time.

As described above, although the gas supply unit 10 has a configuration that is close to a free piston engine where the piston 12 reciprocates on the inside 14 of the cylinder due to the combustion pressure obtained when fuel is burned in a combustion chamber, by controlling the movable magnet 21 that is connected to the piston 12 using the first linear power generating unit 210, the first control unit 610 can control the position of the piston 12 against the combustion pressure, and it is possible to cause the piston 12 to move with desired positions of the inside 14 of the cylinder as the dead centers. Accordingly, in the engine 5, it is possible to flexibly adjust the piston movement cycle, the compression ratio during combustion, and the like in units of the gas supply units 10, and possible to supply the driving gas 71 with conditions that are suited to driving the turbine 6.

FIG. 6 depicts a different example of the engine 5. In the engine 5, the shaft 13 connected to the piston 12 also extends toward the opposite side in the length direction, and a first control unit 610 that is a mechanical piston control unit 60 is provided in the length direction outside the gas supply unit 10. The first control unit 610 includes a movable portion 61 connected to the piston 12 via the shaft 13, a pair of stoppers 63a and 63b that catch and release the movable portion 61, and a management unit 65 that controls the positions of the stoppers 63a and 63b. In this engine 5, since it is possible to control the position of the piston 12 with the mechanical first control unit 610, the linear power generating unit 210 that is provided on the opposite side of the first control unit 610 may be a unit dedicated to only linear power generation. If the linear power generating unit 210 has a function as the piston control unit 60, the mechanical first control unit 610 and the linear power generating unit 210 may perform cooperative control over the piston 12. The configuration that mechanically controls the position and/or movement of the piston 12 via the shaft 13 is not limited to this example. As another example, in place of a linear motor, the movable magnet 21 of the shaft 13 may be moved or fixed via a magnetic force provided by an electromagnetic coil or magnet that is physically moved by a motor, an air cylinder, or the like.

FIG. 7 depicts yet another example of the engine 5. The engine 5 is provided with first linear power generating units 210 that are connected to the piston 12 via the shaft 13 on both sides of the piston 12, that is, on both of the combustion chamber 31 and 32 sides. This example depicts a configuration where the respective first linear power generating units 210 function as the first control unit 610, electromagnetic force for controlling the piston 12 is obtained by two linear power generating units (linear motor units) 210 acting in cooperation, and the linear power generating unit 210 may be provided compactly and at low cost. By disposing a permanent magnet 26 at the end of the first linear power generating unit 210, a function as a shock absorber is achieved. On the other hand, it is also possible to use a configuration where one unit, for example, the unit on the combustion chamber 32 side, functions only as the first linear power generating unit 210 and the unit on the combustion chamber 31 side on the opposite side functions only as the first control unit 610 that controls the piston 12 as a linear motor unit. Since the respective units may be dedicated to generating power and to control, it may be possible to simplify the configuration and control.

FIG. 8 depicts yet another example of the engine 5. In this engine 5, a combustion chamber 31 is provided on one side of the piston 12 of the cylinder 11, a spring 69 is disposed in a sub chamber (second chamber) 39 on the opposite side of the piston 12, and an opposite force (second force or pressure) for compressing the combustion chamber 31 is obtained via the piston 12. In the example described earlier, although the piston control unit 60 is disposed along the length direction outside the gas supply unit 10 and is connected to the piston 12 by the shaft 13, in this example, the piston control unit 60 is incorporated so as to be integrated with the gas supply unit 10. In more detail, the piston control unit 60 includes a second control unit 620 that is disposed along the cylinder 11 on the outer peripheral side of the combustion chamber 31 and the reaction chamber (second chamber) 39, and more specifically, on the outside (outer peripheral side) of the cylinder 11, and controls the position of the piston 12 via a magnetic field. The piston 12 includes magnets 66a and 66b that are disposed (incorporated) at the front and rear ends. The second control unit 620 includes magnets 68a and 68b disposed at the front and rear of the cylinder 11 and magnets 67a and 67b disposed around the cylinder 11. These magnets may be electromagnets, permanent magnets, or a mixture thereof. The top dead center of the piston 12 is set by repulsion by the magnets 68a and 66a and the bottom dead center of the piston 12 is set by repulsion by the magnets 68b and 66b. The positions of the top dead center and the bottom dead center can be controlled and/or movement of the piston 12 can be restricted by the surrounding magnets 67a and 67b, so that high-pressure driving gas 71 can be expelled from the gas output port 17.

The reaction chamber 39 on the opposite side to the combustion chamber 31 with the piston 12 in between may be used as a region for storing compressed air to be supplied to the combustion chamber 31. The compressed air stored in the reaction chamber 39 is compressed when the piston 12 moves toward the opposite side due to combustion inside the combustion chamber 31, and functions together with the spring 69 as a damper that moderates sudden movement of the piston 12. The reaction chamber 39 may also include a position sensor (such as a contact sensor or an optical sensor) for detecting the position of the piston 12. When the piston 12 moves to the left and compresses the compressed air inside the combustion chamber 31, it is possible to introduce more compressed air into the reaction chamber 39, so that the pressure in the combustion chamber 31 and the reaction chamber 39 on both sides of the piston 12 can be made as close as possible, reducing the pressure difference and balancing the pressures. That is, if the spring 69 does not exert an elastic force, the piston 12 can be moved in a floating-like condition between the combustion chamber 31 and the reaction chamber 39. By doing so, it becomes easy to move the piston 12 toward the combustion chamber 31 using the elastic force of the spring 69, so that the combustion air inside the combustion chamber 31 can be further compressed using a small elastic force. As one example, combustion air, which has been adiabatically compressed by a compressor to a level that is close to but does not reach the ignition temperature, is supplied to the combustion chamber 31 via the reaction chamber 39 and is adiabatically compressed by the piston 12 to raise the temperature of the combustion air to the ignition temperature.

A metal spring 69 is preferable as a mechanism for obtaining the opposite force (second force) for driving the piston 12 under these conditions. Provided that it is possible to satisfy conditions such as the movement amount of the piston 12, the elastic force (pressure) for causing movement, and temperature, it is possible to use another type of elastic body, such as rubber. A damper with viscoelasticity or a combination of a damper and a spring may also be used.

FIG. 9 depicts yet another example of the engine 5. The gas supply units 10 of the engine 5 also include combustion chambers 31 and 32 provided on both sides of the piston 12 of the cylinder 11. Each gas supply unit 10 includes a second control unit 620 disposed on the outer periphery of the combustion chambers 31 and 32 as a piston control unit 60 that controls the position of the piston 12. The second control unit 620 controls the position of the piston 12 via a magnetic field. In more detail, the second control unit 620 includes a plurality of electromagnets (fixed coils) 23 arranged around (outer periphery of) the cylinder 11 along the length direction of the cylinder 11, that is, the direction of movement (reciprocating direction) of the piston 12. The piston 12 includes permanent magnets 29 disposed at or incorporated into both ends of the piston 12. The electromagnets 23 are switched on and off and have their polarities controlled by a management unit (control unit) 50, and control the movement of the piston 12 via magnetic fields. That is, the second control unit 620 has a function as a linear motor (linear actuator) that controls the movement of the piston 12 via magnetic fields.

In addition, the electromagnets 23 that construct the second control unit 620 also construct a second linear power generating unit 220 that functions as the linear power generating unit 20 for regenerating electric power from the movement of the piston 12. Accordingly, in the same way as the gas supply unit 10 of the engine 5 described earlier, the gas supply unit 10 of this engine 5 includes a piston control unit 60 that controls the movement of the piston 12 and the piston control unit 60 serves as a linear power generating unit 20 that generates electric power. The linear power generating unit 20 that generates power from the movement of the piston 12 may also serve as the piston control unit 60 that controls the movement of the piston 12. The piston control unit 60 and the linear power generating unit 20 of the gas supply unit 10 include the electromagnets (fixed coils) 23 disposed around (outer periphery of) the cylinder 11, which construct the second linear motor as the second control unit 620 and the second linear power generating unit 220 and operate in cooperation with the movement of the piston 12 via magnetic forces (magnetic fields).

That is, in the gas supply unit 10 of this example also, the piston 12 is caused to move reciprocally by the plurality of electromagnets 23, the air in the combustion chambers 31 and 32 is alternately compressed, combustion is alternately caused in the combustion chambers 31 and 32, and the driving gas 71 is supplied to the turbine 6 alternately from the combustion chambers 31 and 32. In more detail, the movement of the piston 12 and the process of discharging the driving gas 71 and the exhaust gas 72 through the nozzles (output ports and exhaust port) 17 and 18 are the same as in the gas supply unit 10 described earlier. In the following explanation, description of parts that are the same is omitted.

The gas supply unit 10 depicted in FIG. 9 includes, at the center in the length direction of the cylinder 11, a nozzle 17 (18) that is shared by the combustion chambers 31 and 32 and outputs the driving gas 71 and the exhaust gas 72. Accordingly, when the piston 12 moves to the combustion chamber 31 side and the nozzle 17 is opened, high-pressure driving gas 71 is discharged from the combustion chamber 32 and supplied to the turbine 6 via the gas supply line 19. When the pressure in the combustion chamber 32 drops, the output of the nozzle 17 is switched to the exhaust gas line 78 by a valve or the like, and the exhaust gas 72 is discharged to the outside air. After this, when combustion is started in the combustion chamber 31, the piston 12 moves to the combustion chamber 32 side, so that the shared nozzle 17 is closed by the piston 12. When the piston 12 further moves to the combustion chamber 32 side, the shared nozzle 17 is opened and the driving gas 71 is discharged from the combustion chamber 31 in the same way as described above.

FIG. 10 depicts yet another example of the engine 5. The second control unit 620 of each gas supply unit 10 of this engine 5 includes permanent magnets 28 arranged at both ends, in addition to the electromagnets 23 that control the movement of the piston 12. The permanent magnets 28 at both ends of the second control unit 620 have magnetic poles that mutually repel permanent magnets 29 attached to the piston 12, moderate the shock at the top dead center and bottom dead center of the piston 12, and may also promote restarting of the piston 12.

FIG. 11 depicts yet another example of the engine 5. The gas supply units 10 of this engine 5 each include nozzles (gas output ports, gas outlets) 17a and 17b that are independently provided for the combustion chambers 31 and 32 of the cylinder 11. The respective nozzles 17a and 17b also function as the exhaust nozzle 18. By providing the nozzles 17a and 17b respectively in the combustion chambers 31 and 32, the timing at which the nozzles 17a and 17b are opened by the reciprocating movement of the piston 12 may be set at an earlier timing during combustion.

FIG. 12 depicts yet another example of the engine 5. The gas supply units 10 of this engine 5 each include nozzles 17a and 17b for outputting the driving gas 71 that are independently provided for the combustion chambers 31 and 32 of the cylinder 11, and further include an exhaust nozzle 18 in the center of the cylinder 11. The exhaust nozzle 18 is a nozzle that is shared by the combustion chambers 31 and 32.

FIG. 13 depicts yet another example of the engine 5. The second control unit 620 of each gas supply unit 10 of the engine 5 includes a permanent magnet 28 disposed at substantially the center of the cylinder 11, in addition to the electromagnets 23 that control the movement of the piston 12. The permanent magnet 28 at the center of the second control unit 620 may be a magnetic pole that mutually repels permanent magnets 29 attached to the piston 12, or may be a magnetic pole that attracts the permanent magnets 29.

Note that the combinations, positions, numbers, and the like of the electromagnets 23 and the permanent magnets 28 used in the piston control unit 60 for controlling the movement of the piston 12, and more specifically, the first control unit 610 and the second control unit 620, are not limited to these examples. The piston control unit 60 may be a combination of a first control unit 610 that controls the piston 12 via the shaft 13 and a second control unit 620 that controls the piston 12 through the cylinder 11 using a magnetic field. The piston control unit 60 may be a unit that may variably control the stroke of the piston 12, or may be a unit that performs control to keep the stroke constant. Each of the control units 610 and 620 may be constructed using only the electromagnets 23, may be a combination of the permanent magnets 28 and the electromagnets 23, or may be constructed of only the permanent magnets 28. The positions and numbers of such magnets can be selected as appropriate. The piston control unit 60 may be equipped with a mechanism that may directly change the positions and numbers of the permanent magnets 28 and/or the electromagnets 23.

FIG. 14 schematically depicts the timing at which the driving gas 71 may be supplied to the turbine 6. In the jet engine cycle, the driving gas 71 is continuously supplied to the turbine 6. However, in order to increase the compression ratio, it is necessary to drive a compressor with a large compression ratio using a turbine, which make it difficult to improve the combustion efficiency. Although it is possible to drive the gas supply units described above in four cycles, it may be difficult to stably rotate the turbine 6 due to the intermittent outputting of the driving gas 71. By driving the gas supply units in two cycles, the intervals at which the driving gas 71 is supplied may be reduced. in addition, with the gas supply units 10 where the combustion chambers 31 and 32 are formed on both sides of the piston 12, the driving gas 71 may be supplied to the turbine 6 almost continuously in one cycle. In addition, by using the piston 12, it is easy to increase the compression ratio in the combustion chambers 31 and 32, which tends to also improve the combustion efficiency.

In addition, the engine 5 includes a plurality of gas supply units 10, and the driving gas 71 may be supplied to the turbine 6 much more continuously by appropriately setting the timing (phase) at which the driving gas 71 is outputted from the gas supply units 10, which makes it possible to rotate the turbine 6 more stably.

## Claims

1. An engine comprising a gas supply unit that supplies combustion gas for driving purposes with reciprocating linear movement of a piston,
wherein the gas supply unit includes:
a first combustion chamber provided on a first side of the piston;
a first gas outlet that supplies high-pressure combustion gas generated in the first combustion chamber for driving purposes; and
a second chamber that is provided on a second side on an opposite side of the piston and generates a second force that moves the piston toward the first side,
and the engine further comprises a piston control unit that controls a position of the piston against a first force that moves the piston due to combustion in the first combustion chamber and the second force.

2. The engine according to claim 1,
wherein the gas supply unit includes an exhaust port for exhausting low-pressure combustion gas inside the first combustion chamber.

3. The engine according to claim 1 or 2,
wherein the second chamber is a second combustion chamber, and
the gas supply unit includes a second gas outlet that supplies high-pressure combustion gas generated in the second combustion chamber for driving purposes.

4. The engine according to any one of claims 1 to 3,
wherein the piston control unit is disposed outside the first combustion chamber and the second chamber and includes a first control unit that controls the position of the piston via a shaft connected to the piston.

5. The engine according to any one of claims 1 to 4,
further comprising a first linear power generating unit connected via a shaft to the piston.

6. The engine according to claim 5,
wherein the first linear power generating unit has a function as the first control unit.

7. The engine according to claim 5 or 6,
wherein the first linear power generating unit includes a function as a first linear motor that starts the engine by driving the piston.

8. The engine according to any one of claims 1 to 7,
wherein the piston control unit includes a second control unit that is disposed on an outer periphery of the first combustion chamber and the second chamber, and controls the position of the piston via a magnetic field.

9. The engine according to any one of claims 1 to 8,
further comprising a second linear power generating unit that is disposed on the outer periphery of the first combustion chamber and the second chamber and is connected to the piston via a magnetic field.

10. The engine according to claim 9,
wherein the second linear power generating unit includes a function as the second control unit.

11. The engine according to claim 9 or 10,
wherein the second linear power generating unit has a function as a second linear motor that starts the engine by driving the piston.

12. The engine according to any one of claims 1 to 11,
further comprising a gas turbine to which the high-pressure combustion gas is supplied from the first gas outlet.

13. The engine according to claim 12,
wherein the gas turbine includes a radial turbine, and a plurality of the gas supply units are arranged around periphery of the radial turbine unit.

14. A power generating apparatus comprising:
the engine according to claim 13; and
a generator connected to the gas turbine.
